# EUROPEAN PATENT SPECIFICATION

(11) **EP 3 861 209 B1**
(45) Date of publication and mention of the grant of the patent: **22.04.2026**
(21) Application number: 19786446.5
(22) Date of filing: 23.09.2019
(51) Int. Cl.: F03D 1/06, F03D 80/00, F03D 80/50, C09J 7/00, C09J 7/35, C09J 7/38

(54) **ADHESIVE SHEET FOR MOUNTING A PROTECTIVE SHELL TO A WIND TURBINE BLADE AND METHOD FOR MOUNTING A PROTECTIVE SHELL TO A WIND TURBINE BLADE**
KLEBEFOLIE ZUR BEFESTIGUNG EINER SCHUTZHÜLLE AN EINEM WINDTURBINENFLÜGEL UND VERFAHREN ZUR BEFESTIGUNG EINER SCHUTZHÜLLE AN EINEM WINDTURBINENFLÜGEL
FEUILLE ADHÉSIVE POUR LE MONTAGE D'UNE ENVELOPPE PROTECTRICE SUR UNE PALE D'ÉOLIENNE ET PROCÉDÉ DE MONTAGE D'UNE ENVELOPPE PROTECTRICE SUR UNE PALE D'ÉOLIENNE

(30) Priority: 01.10.2018 EP 18198013
(43) Date of publication of application: 11.08.2021
(73) Proprietor: Siemens Gamesa Renewable Energy A/S, 7330 Brande (DK); Covestro Deutschland AG, 51373 Leverkusen (DE)
(72) Inventor: KRATMANN, Kasper Koops, 8000 Aarhus C (DK); STENBECK, Wolfgang, 29699 Bomlitz (DE)
(74) Representative: SGRE-Association
(86) International application number: PCT/EP2019/075466
(87) International publication number: WO 2020/069890

(56) References cited:
- WO-A1-03/099953
- WO-A1-2018/060298
- WO-A1-2019/134862
- US-A1- 2014 154 089
- US-A1- 2016 046 088
- US-A1- 2016 115 356

## Description

Adhesive sheet for mounting a protective shell to a wind turbine blade and method for mounting a protective shell to a wind turbine blade

The invention relates to an adhesive sheet for mounting a protective shell to a wind turbine blade. Furthermore, the invention relates to a method for mounting a protective shell to a wind turbine blade.

The blades of wind turbines, especially the leading edges of the wind turbine blades, can suffer from erosion during their lifetime. This erosion can particularly occur, when particles such as rain, hail, sand, and/or dust impact on the leading edge of the wind turbine blade while the wind turbine blade is rotating at high speeds. This erosion can lead to structural damage and to a decreased performance of the airfoil of the wind turbine blade. It is therefore important to provide a means of repairing and protecting the wind turbine blades and especially the leading edges of wind turbine blades.

For protection of the edges of wind turbine blades and/or for the repair of damaged wind turbine blades, it is known to apply a protective layer or a protective shell to the wind turbine blade, in particular to the leading edge, before an installation of the wind turbine blade and/or as a repair solution on already operative wind turbines.

The prior art is represented e.g. by WO 2018/060298 A1.

However, a positioning of both the protective shell and a hot-melt adhesive, which is used to fixate the protective shell on the wind turbine blade, can be difficult, especially when repairing an already operative wind turbine. Both the protective shell and the hot-melt adhesive have to be aligned and kept in position prior to an activation of the hot-melt adhesive by a heat treatment leading to a permanent fixation of the protective shell to the wind turbine blade.

It is therefore an object of the invention to provide an improved adhesive sheet, which facilitates the mounting of a protective shell to a wind turbine blade.

According to the invention, this object is achieved by an adhesive sheet consisting of a hot-melt adhesive layer, wherein on at least one surface of the adhesive layer, at least one fixation structure consisting of a pressure-sensitive adhesive is attached.

The pressure-sensitive adhesive allows a reversible attachment of the adhesive sheet to the wind turbine blade. The pressure-sensitive adhesive sticks to the wind turbine blade by forming a bond when pressure is applied to the adhesive sheet after aligning it on the wind turbine blade. However, since the bond between the pressure-sensitive adhesive and the wind turbine blade is not permanent, a subsequent removal of the adhesive sheet remains possible. Advantageously, in case of a misalignment of the adhesive sheet, the adhesive sheet can be removed from the wind turbine blade and it can be fixated against the wind turbine blade again by using the fixation structures consisting of the pressure-sensitive adhesive.

The usage of pressure-sensitive adhesive for the at least one fixation structure enables a fixation of the adhesive sheet to the wind turbine blade, especially to a leading edge of the wind turbine blade, prior to an activation of the hot-melt adhesive layer of the adhesive sheet. This facilitates the arrangement of both the adhesive sheet and the protective shell since the adhesive sheet can be aligned and attached in the correct position prior to a positioning of the protective shell. Additionally, the usage of the pressure-sensitive adhesive for the fixation structures enables a repositioning of a misaligned adhesive sheet without damaging an outer surface of the wind turbine blade.

In a preferred embodiment of the invention, the hot-melt adhesive layer comprises at least one fixation structure on both of two opposing surfaces. The adhesive sheet can have a rectangular shape and a thickness, which is small compared to the width and the length, so that the adhesive sheet consists substantially of two opposing surfaces. Of course, also other shapes than a rectangular shape are possible, for instance a triangular shape, a trapezoid shape and so on. Prior to the mounting of a protective shell to the wind turbine blade, the adhesive sheet can be mounted for instance to the leading edge of the wind turbine blade in such manner, that one of the surfaces of the adhesive sheet abuts the surface of the wind turbine blade. Due to the fixation structures consisting of the pressure-sensitive adhesive, the adhesive sheet is attached to the wind turbine blade. Afterwards, the protective shell can be attached to the other surface of the adhesive sheet. Due to the fixation structures consisting of pressure-sensitive adhesive also on the other surface of the adhesive sheet, also an attachment of the protective shell to the adhesive sheet is possible. This enables advantageously also a reversible attachment of the protective shell to the adhesive sheet or to the wind turbine blade, respectively. By a usage of the fixation structures on each of two opposing surfaces of the adhesive sheet, both an attachment of the adhesive sheet and the protective shell to the wind turbine blade can be obtained and a possibility of realignment of both the adhesive sheet and the protective shell is provided.

Preferably, the fixation structure comprises a plurality of fixation areas, which are arranged spaced from one another on the surface. The fixation areas can have for example rectangular or triangular shapes covering each a part of the surface of the hot-melt adhesive layer. The fixation areas are arranged spaced from another, so that a gap or a dimple is formed in between two or more neighbouring fixation areas. It may be provided that the areas cover a large portion of the surface of the hot-melt adhesive layer, wherein only a small portion of the surface of the hot-melt adhesive layer is not covered by the fixation areas forming the gaps between the fixation areas. The provision of gaps between the fixation areas enables at least partly an evacuation of air underneath the adhesive sheet which can be performed prior to an activation of the hot-melt of the adhesive sheet.

In a preferred embodiment of the invention, the fixation structure comprises a plurality of fixation elements, which are arranged spaced from each other. The fixation elements can be for instance dot-shaped or rectangular. Due to the spacing of the fixation elements, a portion of the surface of the hot-melt adhesive layer is not covered by fixation structures facilitating an evacuation underneath the adhesive sheet. It is of course possible that both fixation areas and fixation elements are used on the same or on different surfaces of the hot-melt adhesive layer. There can be for instance sections on the surface of the adhesive layer which comprise fixation areas and additional sections, which comprise fixation elements. It is also possible, that the fixation structures on one surface differ from the fixation structure on the other surface.

The fixation elements or at least a part of the fixation elements may preferably be arranged along at least one straight line and/or along at least one curve with a sinusoidal shape. The lines can be for instance parallel or under an angle to two opposing edges of a rectangular adhesive sheet. It is possible that for instance at least one straight line of fixation elements is arranged parallel to the longer edges of a rectangular and stripe-shaped adhesive sheet. This straight line of fixation elements can be for instance arranged in the centre or substantially in the centre of the shorter edges of the rectangular and straight shaped adhesive sheet, so that a fixation of the adhesive sheet along this centre line to an edge of the wind turbine blade is possible. Of course, additional straight lines of fixation elements can be provided circumferentially to the adhesive sheet or parallel to the edges of the adhesive sheet, respectively.

Preferably, the fixation structure is printed on the at least one surface of the hot-melt adhesive layer. By printing the fixation structure on the hot-melt adhesive layer of the adhesive sheet, a fabrication of the adhesive sheet can be facilitated since the printing of the pressure-sensitive adhesive enables a quick and reproduceable production of the adhesive sheet.

A method for mounting a protective shell to a wind turbine blade according to the invention comprises the following steps:
- arranging an adhesive sheet according to the invention on a wind turbine blade, wherein the fixation structure is used to fixate the adhesive sheet on the wind turbine blade,
- arranging a protective shell on the adhesive sheet.

After the arrangement of both the adhesive sheet and the protective shell, a heat treatment can be performed for activation of the hot-melt adhesive layer of the adhesive sheet resulting in a permanent attachment of the protective shell to the wind turbine blade. The attachment using the pressure-sensitive adhesive may be not strong enough and not enduring enough for a permanent fixture of the protective shell to the wind turbine blade but it provides a temporal fixation suitable for facilitating the arrangement of the adhesive sheet and/or the protective shell. However, the permanent fixture of the protective shell to the wind turbine blade can be obtained using the hot-melt adhesive layer of the adhesive sheet.

In a preferred embodiment of a method according to the invention, an adhesive sheet with at least one fixation structure on each of two opposing surfaces of the hot-melt adhesive layer is used, wherein the protective shell is fixated to the adhesive sheet using the fixation structure on the surface of the adhesive layer directed towards the protective shell. The other surface of the adhesive layer is directed towards the wind turbine blade for a fixation of the adhesive sheet on the wind turbine blade. By using an adhesive sheet comprising fixation structures on both surfaces, also an attachment of the protective shell to the adhesive sheet is obtained prior to a heating of the hot-melt adhesive layer of the adhesive sheet. Due to the usage of the pressure-sensitive adhesive for the fixation structures, both a repositioning of the adhesive sheet and of the protective shell is possible prior to their permanent fixation.

Preferably, a vacuum is applied to the adhesive sheet and to the protective shell after their arrangement on the wind turbine blade. A vacuum can be applied for instance by the use of a vacuum bag surrounding the adhesive sheet, the protective shell, and at least a part of a wind turbine blade. Additionally or alternatively, also a heating blanket, which enables an evacuation of a volume underneath the blanket, can be used. Advantageously, an adhesive sheet with a fixation structure comprising a plurality of spaced fixation areas and/or fixation elements is used facilitating the creation of a vacuum between the adhesive sheet and the wind turbine blade or the protective shell, respectively.

Additional advantages and features of the invention become evident from the embodiments discussed below as well as from the figures. The figures show:
- Fig. 1: a first embodiment of an adhesive sheet according to the invention,
- Fig. 2: a second embodiment of an adhesive sheet according to the invention,
- Fig. 3: a third embodiment of an adhesive sheet according to the invention,
- Fig. 4: a fourth embodiment of an adhesive sheet according to the invention,
- Fig. 5: a cross-sectional view of an adhesive sheet according to the invention,
- Fig. 6: an adhesive sheet according to the invention in a protective shell mounted to a wind turbine blade, and
- Fig. 7: a cross section of an adhesive sheet according to the invention in a protective shell mounted on a wind turbine blade.

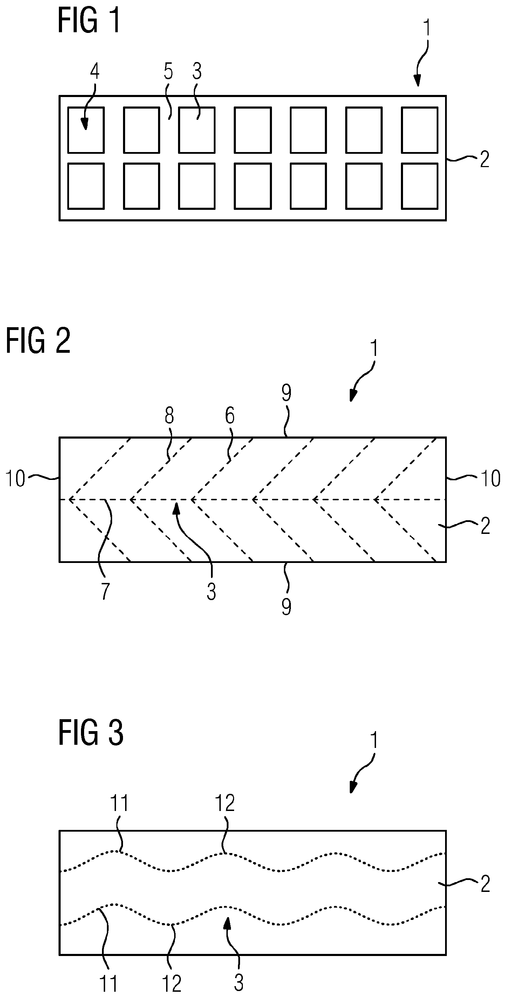

In fig. 1, a first embodiment of an adhesive sheet 1 according to the invention is shown. The adhesive sheet 1 comprises a hot-melt adhesive layer 2 and a fixation structure 3. In this embodiment, the fixation structure 3 comprises a plurality of square-shaped adhesive areas 4 consisting of a pressure-sensitive adhesive attached on the surface of the hot-melt adhesive layer 2. The fixation areas 4 are arranged spaced from one another on the surface of the hot-melt adhesive layer 2, so that gaps 5 are formed between neighbouring fixation areas 4. The gaps 5 facilitate an evacuation of the volume underneath the adhesive sheet 1 when the adhesive sheet 1 is arranged on a wind turbine blade in its mounted state. Besides having a square-shape, the fixation areas 4 can have also rectangular, triangular or a polygonal shape.

In fig. 2, a second embodiment of an adhesive sheet 1 according to the invention is depicted. The fixation structure 3 comprises a plurality of fixation elements 6 consisting of pressure-sensitive adhesive, which are aligned on the surface of the hot-melt adhesive layer along a centre straight line 7 and a plurality of additional straight lines 8. The adhesive sheet 1 comprises a rectangular shape, wherein the centre straight line 7 is aligned parallel to the longer edges 9 of the adhesive sheet 1. Also, the centre line 7 is aligned within the centre or close to the centre of the shorter edges 10 of the adhesive sheet 1. The additional straight lines 8 are arranged under an angle to the centre straight line 7 or the longer edges 9 of the adhesive sheet 1, respectively. The centre straight line 7 can be used for instance to fixate the adhesive sheet to an edge of a wind turbine blade, wherein the additional straight lines 8 are used for attachment of the adhesive sheet to the surfaces of the wind turbine blade adjacent to the edge of the wind turbine blade. It is also possible that more than one centre line 7 is provided, which are arranged parallelly in a short distance to a geometrical centre of the shorter edges 10 of the rectangular adhesive sheet 1.

In fig. 3, a third embodiment of an adhesive sheet 1 according to the invention is shown. In this embodiment, the fixation structure 3 comprises a plurality of dot-shaped fixation elements 11, which are arranged along two curves 12 with a sinusoidal shape. Of course, more than two curves 12 with a sinusoidal shape can be provided on one or both surfaces of the hot-melt adhesive layer 2.

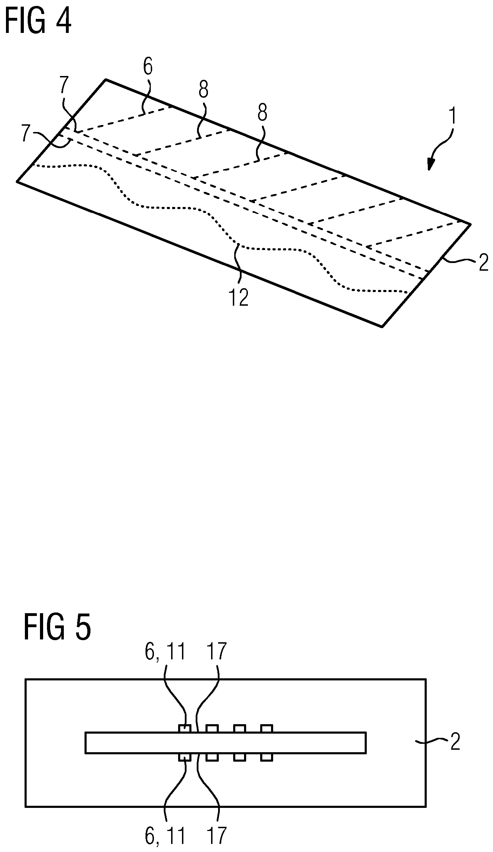

In fig. 4, a fourth embodiment of an adhesive sheet 1 according to the invention is shown. Thereby, the fixation structure 3 comprises fixation elements 6 arranged along two center straight lines 7, a plurality of additional straight lines 8 and a sinusoidal curve 12. Of course, also other combinations and/or arrangements of fixation elements can be provided as well.

In fig. 5, a schematical side view of an adhesive sheet 1 according to the invention is shown. The adhesive sheet 1 can be fixated with the fixation elements 6, 11 to a surface of the wind turbine blade, so that underneath a portion 17 of the adhesive sheet, which is not covered by the fixation structure 3, air can be removed by applying a vacuum. Both the usage of the fixation elements 6 shown in fig. 2 and 4 as well as the dot-shaped fixation elements 11 depicted in fig. 3 or the fixation areas 4 with the gaps 5 in between shown in fig. 1 facilitate the creation of a vacuum underneath the adhesive sheet 1. The fixation areas 4 and the fixation elements 6, 11 can be formed by printing the pressure-sensitive adhesive on the hot-melt adhesive layer 2 of the adhesive sheet 1.

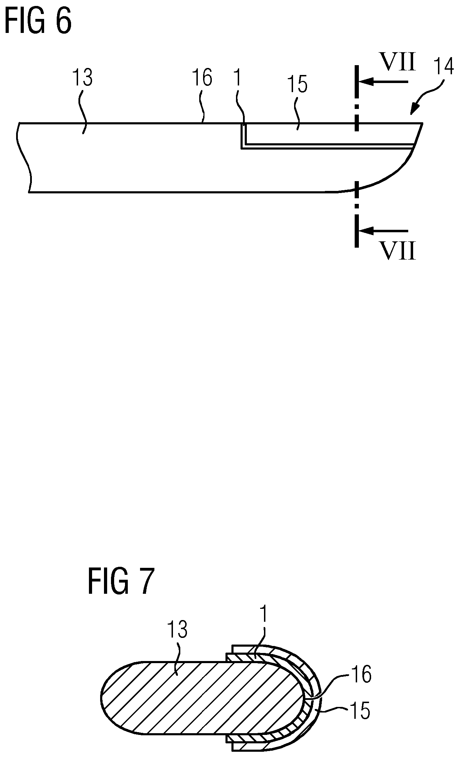

In fig. 6, a wind turbine blade 13 is shown. In a tip area 14 of the wind turbine blade 13, an adhesive sheet 1 and a protective shell 15 are arranged on a leading edge 16 of the wind turbine blade 13. A method for mounting a protective shell 15 to a wind turbine blade 1 according to the invention can be performed for instance during fabrication of the wind turbine blade 13 or during a repair process on a wind turbine blade 13, which is mounted on an already operative wind turbine. In such a method, first the adhesive sheet 1 is arranged on the leading edge 16 of the wind turbine blade 13, wherein the fixation structure 3 of the adhesive sheet 1 is used to fixate the adhesive sheet 1 on the wind turbine blade 13. Afterwards, the protective shell 15 is arranged on the adhesive sheet 1. Afterwards, it is possible that the adhesive sheet 1 is heated for activation of the hot-melt adhesive layer 2. This can be done for instance using a heating blanket covering both the adhesive sheet 1 and the protective shell 15. For improvement of the attachment of the protective shell 15 to the adhesive sheet 1 or the wind turbine blade 13, respectively, a vacuum can be applied for removing the air underneath the protective shell 15 and the adhesive sheet 1. This can be done for instance using a vacuum heating blanket, which is formed to create a vacuum underneath the heating blanket and/or by application of a vacuum bag to the wind turbine blade 13, wherein the vacuum bag covers the protective shell 15, the adhesive sheet and at least a part of the wind turbine blade 13, so that by the evacuation of the vacuum bag, also the air between the adhesive sheet 1 and the protective shell 15 as well as in between the wind turbine blade 13 and the adhesive sheet 1 can be removed.

When using an adhesive sheet 1 which exhibits fixation structures 3 on each of two opposing surfaces, both the adhesive sheet 1 and the protective shell 15 can be attached prior to the activation of the hot-melt adhesive layer 2 to the surface of the wind turbine blade 13. This facilitates both the arrangement of the adhesive sheet 1 and the protective shell 15 on the wind turbine blade and enables, for instance in the case of misalignment, a removal of the protective shell 15 and/or the adhesive sheet 1 and their reattachment.

In fig. 7, a cross-section according to the dashed line VII - VII in fig. 6 is shown. Besides a cross section of the wind turbine blade 13, also the adhesive sheet 1 and the protective shell 15 are shown in a state mounted to the leading edge 16 of the wind turbine blade 13. Both the adhesive sheet 1 and the protective shell 15 are arranged on the leading edge 16 of the wind turbine blade 13, so that they wrap a circumference of the wind turbine blade 13 at least partially. Due to the large contact area between the adhesive sheet 1 and the wind turbine blade 13 and/or the protective shell 15, respectively, a stable attachment of both the adhesive sheet 1 to the wind turbine blade 13 and the protective shell 15 to the adhesive sheet 1 or the wind turbine blade 13, respectively, is obtained by using the fixation structures consisting of pressure-sensitive adhesive. An attachment of the adhesive sheet 1 to the wind turbine blade 13 can occur for instance by pressing the adhesive sheet 1 to a surface of the wind turbine blade 13 activating the pressure-sensitive adhesive enabling the fixation of the adhesive sheet 1 to the wind turbine blade 13. Also a fixation of the protective shell 15 can occur by pressing the protective shell 15 to the already attached adhesive sheet 1.

After a curing of the hot-melt adhesive layer 2 by a thermal treatment, a trimming and/or grinding of the surface of the wind turbine blade 13 can occur for flattening the edges of the adhesive sheet 1 or the remainder of the adhesive, respectively, and of the protective shell 15, so that a flat and smooth surface of the wind turbine blade 13 is obtained. This can increase the aerodynamic properties of the wind turbine blade 13. The trimming and/or grinding can be performed for instance manually using respective trimming and/or grinding devices or machines.

Although the present invention has been described in detail with reference to the preferred embodiment, the present invention is not limited by the disclosed examples from which the skilled person is able to derive other variations without departing from the scope of the invention.

## Claims

1. Adhesive sheet for mounting a protective shell (15) to a wind turbine blade (13), wherein the adhesive sheet (1) consists of a hot-melt adhesive layer (2), wherein on at least one surface of the adhesive layer (2), at least one fixation structure (3) consisting of a pressure-sensitive adhesive is attached.

2. Adhesive sheet according to claim 1, **characterized in that** the hot-melt adhesive layer (2) comprises at least one fixation structure (3) on each of two opposing surfaces.

3. Adhesive sheet according to claim 1 or 2, **characterized in that** the fixation structure (3) comprises a plurality of fixation areas (4), which are arranged spaced from one another on the surface.

4. Adhesive sheet according to one of the preceding claims **characterized in that** the fixation structure (3) comprises a plurality of fixation elements (6, 11), which are arranged spaced from each other.

5. Adhesive sheet according to claim 4, wherein the fixation elements (6, 11) or at least a part of the fixation elements (6, 11) are arranged along at least one straight line (7, 8) and/or along at least one curve (12) with a sinusoidal shape.

6. Adhesive sheet according to one of the preceding claims, **characterized in that** the fixation structure is printed on the at least one surface of the hot-melt adhesive layer (2).

7. Method for mounting a protective shell (15) to a wind turbine blade (13), comprising the following steps:
• arranging an adhesive sheet (1) according to one of the preceding claims on a wind turbine blade (13), wherein the fixation structure (3) is used to fixate the adhesive sheet (1) on the wind turbine blade,
• arranging a protective shell (15) on the adhesive sheet (1).

8. Method according to claim 7, **characterized in that** an adhesive sheet with at least one fixation structure (3) on each of two opposing surfaces of the hot-melt adhesive layer (2) is used, wherein the protective shell (15) is fixated to the adhesive sheet (1) using the fixation structure (3) on the surface of the adhesive layer (2) directed towards the protective shell (15).

9. Method according to claim 7 or 8, **characterized in that** a vacuum is applied to the adhesive sheet (1) and the protective shell (15) after their arrangement on the wind turbine blade (13).

## Patentansprüche

1. Klebefolie zum Befestigen einer Schutzhülle (15) an einem Windturbinenflügel (13), wobei die Klebefolie (1) aus einer Schmelzklebeschicht (2) besteht, wobei auf mindestens einer Oberfläche der Klebeschicht (2) mindestens eine Fixierstruktur (3) angebracht ist, die aus einem druckempfindlichen Kleber besteht.

2. Klebefolie nach Anspruch 1, **dadurch gekennzeichnet, dass** die Schmelzklebeschicht (2) mindestens eine Fixierstruktur (3) auf jeder zweier gegenüberliegender Oberflächen umfasst.

3. Klebefolie nach Anspruch 1 oder 2, **dadurch gekennzeichnet, dass** die Fixierstruktur (3) eine Vielzahl von Fixierbereichen (4) umfasst, die auf der Oberfläche beabstandet voneinander angeordnet sind.

4. Klebefolie nach einem der vorhergehenden Ansprüche, **dadurch gekennzeichnet, dass** die Fixierstruktur (3) eine Vielzahl von Fixierelementen (6, 11) umfasst, die beabstandet voneinander angeordnet sind.

5. Klebefolie nach Anspruch 4, wobei die Fixierelemente (6, 11) oder mindestens ein Teil der Fixierelemente (6, 11) entlang mindestens einer Geraden (7, 8) und/oder entlang mindestens einer Kurve (12) mit einer Sinusform angeordnet sind.

6. Klebefolie nach einem der vorhergehenden Ansprüche, **dadurch gekennzeichnet, dass** die Fixierstruktur auf die mindestens eine Oberfläche der Schmelzklebeschicht (2) gedruckt ist.

7. Verfahren zum Befestigen einer Schutzhülle (15) an einem Windturbinenflügel (13), umfassend die folgenden Schritte:
• Anordnen einer Klebefolie (1) nach einem der vorhergehenden Ansprüche auf einem Windturbinenflügel (13), wobei die Fixierstruktur (3) dazu verwendet wird, die Klebefolie (1) auf dem Windturbinenflügel zu fixieren,
• Anordnen einer Schutzhülle (15) auf der Klebefolie (1).

8. Verfahren nach Anspruch 7, **dadurch gekennzeichnet, dass** eine Klebefolie mit mindestens einer Fixierstruktur (3) auf jeder zweier gegenüberliegender Oberflächen der Schmelzklebeschicht (2) verwendet wird, wobei die Schutzhülle (15) unter Verwendung der Fixierstruktur (3) auf der Oberfläche der Klebeschicht (2), die in Richtung der Schutzhülle (15) gerichtet ist, auf der Klebefolie (1) fixiert wird.

9. Verfahren nach Anspruch 7 oder 8, **dadurch gekennzeichnet, dass** ein Vakuum auf die Klebefolie (1) und die Schutzhülle (15) nach deren Anordnung auf dem Windturbinenflügel (13) angewandt wird.

## Revendications

1. Feuille adhésive pour le montage d'une coque de protection (15) sur une pale d'éolienne (13), dans laquelle la feuille adhésive (1) consiste en une couche d'adhésif thermofusible (2), dans laquelle sur au moins une surface de la couche d'adhésif (2), au moins une structure de fixation (3) consistant en un adhésif sensible à la pression est fixée.

2. Feuille adhésive selon la revendication 1, **caractérisée en ce que** la couche d'adhésif thermofusible (2) comprend au moins une structure de fixation (3) sur chacune de deux surfaces opposées.

3. Feuille adhésive selon la revendication 1 ou 2, **caractérisée en ce que** la structure de fixation (3) comprend une pluralité de zones de fixation (4), qui sont agencées espacées les unes des autres sur la surface.

4. Feuille adhésive selon l'une des revendications précédentes, **caractérisée en ce que** la structure de fixation (3) comprend une pluralité d'éléments de fixation (6, 11), qui sont agencés espacés les uns des autres.

5. Feuille adhésive selon la revendication 4, dans laquelle les éléments de fixation (6, 11) ou au moins une partie des éléments de fixation (6, 11) sont agencés le long d'au moins une ligne droite (7, 8) et/ou le long d'au moins une courbe (12) présentant une forme sinusoïdale.

6. Feuille adhésive selon l'une des revendications précédentes, **caractérisée en ce que** la structure de fixation est imprimée sur l'au moins une surface de la couche d'adhésif thermofusible (2).

7. Procédé de montage d'une coque de protection (15) sur une pale d'éolienne (13), comprenant les étapes consistant à :
• agencer une feuille adhésive (1) selon l'une des revendications précédentes sur une pale d'éolienne (13), dans lequel la structure de fixation (3) est utilisée pour fixer la feuille adhésive (1) sur la pale d'éolienne,
• agencer une coque de protection (15) sur la feuille adhésive (1) .

8. Procédé selon la revendication 7, **caractérisé en ce qu'**une feuille adhésive avec au moins une structure de fixation (3) on chacune de deux surfaces opposées de la couche d'adhésif thermofusible (2) est utilisée, dans lequel la coque de protection (15) est fixée à la feuille adhésive (1) en utilisant la structure de fixation (3) sur la surface de la couche d'adhésif (2) orientée vers la coque de protection (15).

9. Procédé selon la revendication 7 ou 8, **caractérisé en ce qu'**un vide est appliqué à la feuille adhésive (1) et à la coque de protection (15) après leur agencement sur la pale d'éolienne (13).
